# EUROPEAN PATENT APPLICATION

(11) **EP 4 836 111 A1**
(43) Date of publication of application: **04.11.2026**
(21) Application number: 24909989.6
(22) Date of filing: 09.09.2024
(51) Int. Cl.: H01M 50/152, H01M 50/179, H01M 50/536

(54) **BATTERY CELL, BATTERY, BATTERY MODULE, BATTERY PACK, AND ELECTRICAL DEVICE**

(30) Priority: 29.12.2023 CN 202323658353 U
(71) Applicant: BYD Company Limited, Shenzhen, Guangdong 518118 (CN)
(72) Inventor: CHEN, Jiankang, Shenzhen, Guangdong 518118 (CN); LIU, Yanchu, Shenzhen, Guangdong 518118 (CN); ZHOU, Guishu, Shenzhen, Guangdong 518118 (CN); MA, Zhiying, Shenzhen, Guangdong 518118 (CN); LI, Ying, Shenzhen, Guangdong 518118 (CN)
(74) Representative: Taor, Simon Edward William
(86) International application number: PCT/CN2024/117712
(87) International publication number: WO 2025/139043

(57) **Abstract**

An electric apparatus is provided. The electric apparatus includes a battery pack, the battery pack includes a battery module or a battery, the battery module includes the battery, the battery includes a battery cell, and the battery cell includes a casing, an electrode core, and a separator. The electrode core is disposed in the casing, two ends in a length direction of the electrode core are a first end and a second end respectively, and the first end is provided with a positive tab and a negative tab. The separator is disposed in the casing, the separator is located between the second end of the electrode core and the casing, and the separator isolates the electrode core from the casing.

## Description

### CROSS REFERENCE TO RELATED APPLICATIONS

This application claims priority to Chinese Patent Application No. 202323658353.4, filed with the China National Intellectual Property Administration on December 29, 2023 and entitled "BATTERY CELL, BATTERY, BATTERY MODULE, BATTERY PACK, AND ELECTRIC APPARATUS", which is incorporated herein by reference in its entirety.

### TECHNICAL FIELD

This application relates to the field of vehicle technologies, and in particular, to a battery cell, a battery, a battery module, a battery pack, and an electric apparatus.

### BACKGROUND

A battery cell, as a core component of a power battery, plays a significant role in the power battery. For the power battery, the battery cell determines a quality and performance of a power battery product, and also relates to a battery range and capacity of a vehicle.

In the related technology, the battery cell includes a positive tab and a negative tab. When the positive tab and the negative tab are located at a same end in a length direction of the battery cell, that is, when the tabs are drawn from the same end, a current flow in the battery cell does not need to pass through a housing, thereby reducing an impedance of the battery. However, an end that is of an electrode core and that is away from the positive tab and the negative tab is prone to damage, which shortens a service life of the electrode core.

### SUMMARY

This application is intended to resolve at least one of technical problems in the conventional technology. In view of this, a first objective of this application is to provide a battery cell, where an electrode core is separated from a casing by a separator, thereby protecting the electrode core and extending a service life of the electrode core.

A second objective of this application is to provide a battery using the foregoing battery cell.

A third objective of this application is to provide a battery module using the foregoing battery.

A fourth objective of this application is to provide a battery pack using the foregoing battery or the foregoing battery module.

A fifth objective of this application is to provide an electric apparatus using the foregoing battery pack.

A battery cell according to an embodiment of a first aspect of this application includes: a casing; an electrode core, where the electrode core is disposed in the casing, two ends in a length direction of the electrode core are a first end and a second end respectively, and the first end is provided with a positive tab and a negative tab; and a separator, where the separator is disposed in the casing, the separator is located between the second end of the electrode core and the casing, and the separator isolates the electrode core from the casing.

In the battery cell according to this application, disposing of the separator separates the second end of the electrode core from the casing (for example, a bottom wall of the casing). The separator provides a protective effect for the electrode core, thereby avoiding damage to the electrode core due to direct contact between the electrode core and the casing, to extend a service life of the electrode core and a service life of the battery cell. In addition, a mounting operation of the separator is simple, thereby improving assembly efficiency of the battery cell. In addition, the positive tab and the negative tab are disposed at the first end of the battery cell, so that a current flow in the electrode core cannot pass through the casing, thereby reducing a structural impedance of the battery cell.

According to some embodiments of this application, at least one penetrating through hole is formed on the separator.

According to some embodiments of this application, a pressure relief apparatus is disposed on the casing, and the pressure relief apparatus is configured to be capable of releasing internal pressure of the battery cell.

According to some embodiments of this application, the casing includes a housing and a bottom cover plate that are connected to each other, the separator isolates the electrode core from the bottom cover plate, and the pressure relief apparatus is disposed on the bottom cover plate.

According to some embodiments of this application, at least a part of the pressure relief apparatus is opposite to the through hole in a thickness direction of the separator.

According to some embodiments of this application, an overlapping area between a projection of the at least a part of the pressure relief apparatus on the separator in the thickness direction of the separator and the through hole is S₁, a cross-sectional area of the pressure relief apparatus taken along a plane perpendicular to the thickness direction of the separator is S₂, and S₁ and S₂ satisfy: 50% ≤ S₁/S₂ ≤ 100%.

According to some embodiments of this application, a cross-sectional area of the through hole taken along a plane perpendicular to the thickness direction of the separator is S₃, a cross-sectional area of the separator taken along a plane perpendicular to the thickness direction of the separator is S₄, and S₃ and S₄ satisfy: 30% ≤ S₃/S₄ ≤ 80%.

According to some embodiments of this application, there are a plurality of through holes, the plurality of through holes form at least one first through hole group and at least one second through hole group, the first through hole group includes a plurality of first through holes, the plurality of first through holes are arranged at intervals in a radial direction of the separator, the second through hole group includes a plurality of second through holes, the plurality of second through holes are arranged at intervals in a circumferential direction of the separator, and the plurality of second through holes and the plurality of first through holes are spaced apart from each other.

According to some embodiments of this application, a cross-sectional area of the second through hole taken along a plane perpendicular to the thickness direction of the separator is greater than a cross-sectional area of the first through hole taken along a plane perpendicular to the thickness direction of the separator.

According to some embodiments of this application, cross-sectional areas of the plurality of first through holes taken along a plane perpendicular to the thickness direction of the separator are all the same; or cross-sectional areas of at least two of the plurality of first through holes taken along a plane perpendicular to the thickness direction of the separator are different.

According to some embodiments of this application, there are a plurality of first through hole groups, the plurality of first through hole groups are arranged at intervals in a circumferential direction of the separator, and the second through hole is located between two adjacent first through hole groups.

According to some embodiments of this application, a minimum distance between any second through hole and a first through hole that is of an adjacent first through hole group and that is close to an edge of the separator is l₁, and l₁ satisfies: 0.5 mm ≤ l₁ ≤ 3 mm; and/or a minimum distance between two adjacent first through holes that are of the first through hole group and that are close to the edge of the separator is l₂, and l₂ satisfies: 0.5 mm ≤ l₂ ≤ 3 mm.

According to some embodiments of this application, a thickness of the separator is h, and h satisfies: 0.3 mm ≤ h ≤ 2 mm.

According to some embodiments of this application, the separator is a polyethylene terephthalate member or a polypropylene member.

A battery according to an embodiment of a second aspect of this application includes the battery cell according to the embodiment in the first aspect of this application.

A battery module according to an embodiment of a third aspect of this application includes the battery according to the foregoing embodiment of the second aspect of this application.

A battery pack according to an embodiment of a fourth aspect of this application includes the battery according to the foregoing embodiment of the second aspect of this application or the battery module according to the foregoing embodiment of the third aspect of this application.

An electric apparatus according to an embodiment of a fifth aspect of this application includes the battery pack according to the foregoing embodiment of the fourth aspect of this application.

Some of additional aspects and advantages of this application are provided in the following descriptions, and some of the additional aspects and advantages become clear from the following descriptions or are learned from practice of this application.

### BRIEF DESCRIPTION OF DRAWINGS

The foregoing and/or additional aspects and advantages of this application are clear and easily understood from the descriptions of the embodiments provided with reference to the following accompanying drawings.
FIG. 1 is a schematic diagram of a battery cell according to an embodiment of this application;
FIG. 2 is an exploded view of a battery cell according to an embodiment of this application;
FIG. 3 is a schematic diagram of a separator of a battery cell according to an embodiment of this application;
FIG. 4 is a schematic diagram of a battery cell from another perspective according to an embodiment of this application;
FIG. 5 is an exploded view of a battery cell from another perspective according to an embodiment of this application;
FIG. 6 is a schematic diagram of assembly of a separator and a pressure relief apparatus of a battery cell according to an embodiment of this application;
FIG. 7 is another schematic diagram of assembly of a separator and a pressure relief apparatus of a battery cell according to an embodiment of this application;
FIG. 8 is still another schematic diagram of assembly of a separator and a pressure relief apparatus of a battery cell according to an embodiment of this application;
FIG. 9 is a schematic block diagram of a battery according to an embodiment of this application;
FIG. 10 is a schematic block diagram of a battery module according to an embodiment of this application;
FIG. 11 is a schematic block diagram of a battery pack according to an embodiment of this application;
FIG. 12 is another schematic block diagram of a battery pack according to an embodiment of this application; and
FIG. 13 is a schematic block diagram of an electric apparatus according to an embodiment of this application.

### Reference numerals:

Electric apparatus 4000, battery pack 3000, battery module 2000, battery 1000, battery cell 100,
casing 1, pressure relief apparatus 11, housing 120, bottom cover plate 12, reinforcing rib 121, protection member 13,
electrode core 2, first end 21, positive tab 211, negative tab 212, second end 22,
separator 3, through hole 31, first through hole group 32, first through hole 321, second through hole group 33, and second through hole 331.

### DESCRIPTION OF EMBODIMENTS

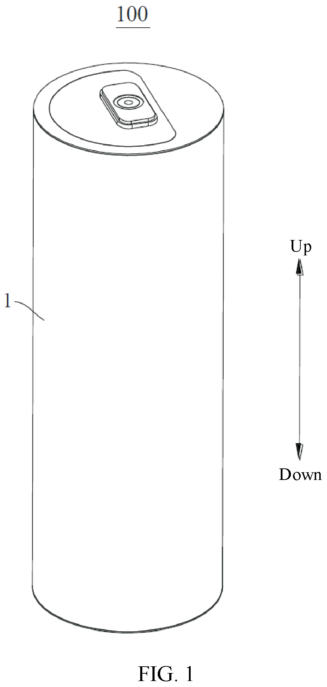

Embodiments of this application are described in detail below. The embodiments described with reference to the accompanying drawings are examples. The following describes a battery cell 100 according to an embodiment of a first aspect of this application with reference to FIG. 1 to FIG. 8.

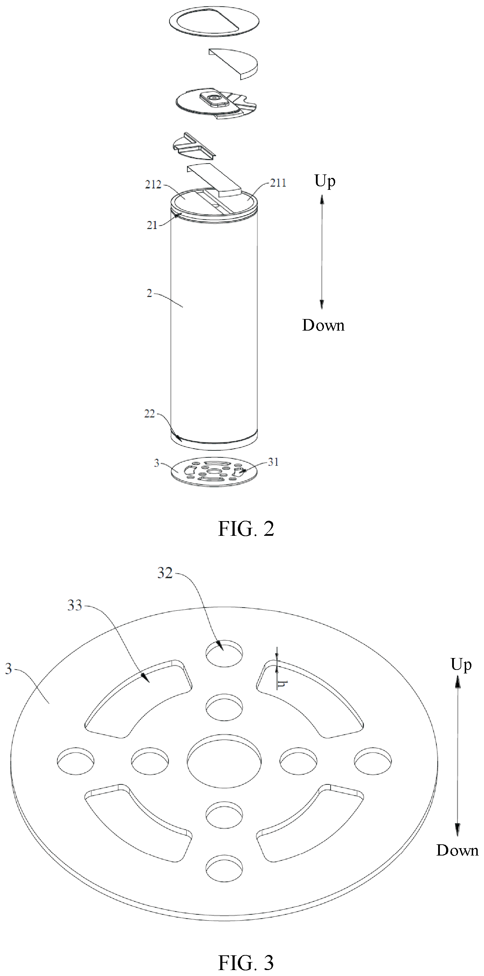

As shown in FIG. 1 and FIG. 2, the battery cell 100 according to an embodiment of the first aspect of this application includes a casing 1, an electrode core 2, and a separator 3.

Specifically, both the electrode core 2 and the separator 3 are disposed in the casing 1. Two ends in a length direction (for example, an up-down direction indicated by an arrow in FIG. 1) of the electrode core 2 are a first end 21 and a second end 22 respectively. The first end 21 is provided with a positive tab 211 and a negative tab 212. The separator 3 is located between the second end 22 of the electrode core 2 and the casing 1, and the separator 3 isolates the electrode core 2 from the casing 1. For example, in the examples shown in FIG. 1 and FIG. 2, an upper end of the electrode core 2 is the first end 21, and a lower end of the electrode core 2 is the second end 22. That is, the separator 3 is located between a lower surface of the second end 22 of the electrode core 2 and a bottom wall of the casing 1. The electrode core 2 is isolated from an inner wall of the casing 1 by the separator 3.

In this setting, the battery cell 100 uses same-end drawing, so that a current flow in the battery cell 100 does not need to pass through the casing 1, thereby reducing a structural impedance. In addition, a venting structure may be disposed at only one end (for example, the foregoing second end 22) of the battery cell 100, which helps improve space utilization of the battery cell 100. In addition, the second end 22 of the electrode core 2 is separated from the casing 1 by the separator 3. The second end 22 of the electrode core 2 is not in contact with the bottom wall of the casing 1. The separator 3 provides a protective effect for the electrode core 2, thereby avoiding damage to the electrode core 2 due to direct contact between the electrode core 2 and the casing 1. This extends a service life of the electrode core 2, and therefore, extends a service life of the battery cell 100. Furthermore, a mounting operation of the separator 3 is simple, as only placing the separator 3 in the casing 1 is needed. This improves assembly efficiency of the battery cell 100.

In the battery cell 100 according to this application, disposing of the separator 3 separates the second end 22 of the electrode core 2 from the casing 1 (for example, the bottom wall of the casing 1). The separator 3 provides a protective effect for the electrode core 2, thereby avoiding damage to the electrode core 2 due to direct contact between the electrode core 2 and the casing 1, to extend a service life of the electrode core 2 and a service life of the battery cell 100. In addition, a mounting operation of the separator 3 is simple, thereby improving assembly efficiency of the battery cell 100. In addition, the positive tab 211 and the negative tab 212 are disposed at the first end 21 of the battery cell 100, so that a current flow in the electrode core 2 cannot pass through the casing 1, thereby reducing a structural impedance of the battery cell 100.

According to some embodiments of this application, referring to FIG. 2 and FIG. 3, at least one penetrating through hole 31 is formed on the separator 3. For example, in the example shown in FIG. 3, the through hole 31 penetrates the separator 3 in a thickness direction (for example, an up-down direction indicated by an arrow in FIG. 3) of the separator 3. In this setting, electrolyte may be stored in the through hole 31, thereby increasing storage space for electrolyte, reducing a risk of electrolyte overflow, and avoiding damage to the battery cell 100.

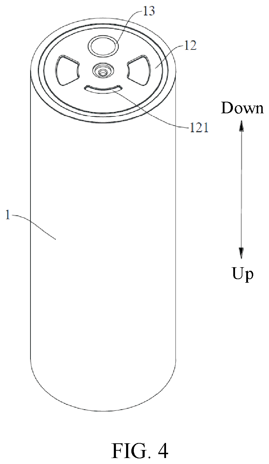

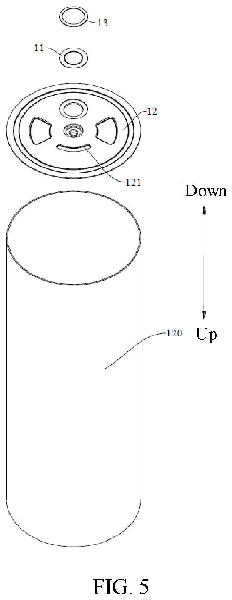

According to some embodiments of this application, referring to FIG. 4 and FIG. 5, a pressure relief apparatus 11 is disposed on the casing 1. The pressure relief apparatus 11 is configured to be capable of releasing internal pressure of the battery cell 100. In this setting, when the internal pressure or temperature of the battery cell 100 reaches a threshold, gas inside the battery cell 100 may be released through the pressure relief apparatus 11, to release the internal pressure of the battery cell 100, which is conducive to normal use of the battery cell 100.

According to some embodiments of this application, referring to FIG. 5, the casing 1 includes a housing 120 and a bottom cover plate 12 that are connected to each other. The separator 3 isolates the electrode core 2 from the bottom cover plate 12, and the pressure relief apparatus 11 is disposed on the bottom cover plate 12. For example, in the example shown in FIG. 5, the bottom cover plate 12 is located at a lower end of the housing 120, the bottom cover plate 12 is connected to the housing 120 through welding, and the pressure relief apparatus 11 is disposed on a side wall on a side that is of the bottom cover plate 12 and that is away from the separator 3. In this way, disposing the casing 1 as a split structure improves processing accuracy of the housing 120 and the bottom cover plate 12, thereby enhancing processing accuracy of the casing 1. For example, the pressure relief apparatus 11 is disposed on the bottom cover plate 12 of the housing 120. The pressure relief apparatus 11 and the bottom cover plate 12 may be an integrally formed structure or may be separate structures. For example, the pressure relief apparatus 11 is a region on the bottom cover plate 12 that is formed with a weakened structure, for example, the pressure relief apparatus 11 is a region provided with a score line groove on the bottom cover plate 12. Certainly, the pressure relief apparatus 11 and the bottom cover plate 12 may alternatively be separate structures, and the pressure relief apparatus 11 may be connected to the bottom cover plate 12 in a manner like welding or the like. Correspondingly, the pressure relief apparatus 11 may be, for example, one of components such as an explosion-proof valve, an explosion-proof disc, a vent valve, a pressure relief valve, or a safety valve. It should be noted that the pressure relief apparatus 11 may alternatively be disposed on the housing 120 to implement pressure relief in the battery cell 100.

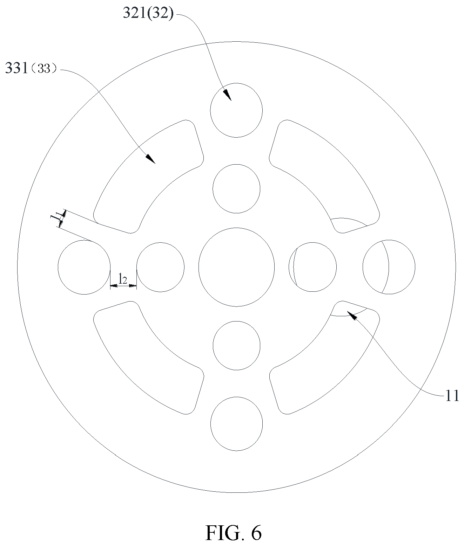

According to some embodiments of this application, referring to FIG. 5 and FIG. 6, at least a part of the pressure relief apparatus 11 is opposite to the through hole 31 in a thickness direction of the separator 3. For example, in the examples shown in FIG. 5 and FIG. 6, at least a part of the pressure relief apparatus 11 communicates with the through hole 31. In this setting, the through hole 31 serves as a gas venting channel. When the internal pressure of the battery cell 100 is excessively high, gas inside the battery cell 100 may flow to the pressure relief apparatus 11 via the through hole 31 and then be discharged to the outside of the battery cell 100. This facilitates pressure relief of the battery cell 100 and smooth opening of the pressure relief apparatus 11, thereby enhancing use safety of the battery cell 100.

Optionally, an overlapping area between a projection of the at least a part of the pressure relief apparatus 11 on the separator 3 in the thickness direction of the separator 3 and the through hole 31 is S₁ (namely, an area of the pressure relief apparatus 11 opposite to the through hole 31 in the thickness direction of the separator 3), a cross-sectional area of the pressure relief apparatus 11 taken along a plane perpendicular to the thickness direction of the separator 3 (namely, a cross-sectional area of the pressure relief apparatus 11 taken along the up-down direction) is S₂, and S₁ and S₂ satisfy: 50% ≤ S₁/S₂ ≤ 100%. For example, when a ratio S₁/S₂ of the area S₁ of the at least a part of the pressure relief apparatus 11 opposite to the through hole 31 in the thickness direction of the separator 3 to the cross-sectional area S₂ of the pressure relief apparatus 11 is less than 50%, a cross-sectional area of the gas venting channel of the pressure relief apparatus 11 is relatively small. Consequently, after the pressure relief apparatus 11 is opened, a volume of gas flowing through the gas venting channel of the pressure relief apparatus 11 per unit time is low, which in turn reduces a gas venting speed of the battery cell 100, and is detrimental to pressure relief of the battery cell 100. Therefore, setting the area S₁ of the at least a part of the pressure relief apparatus 11 opposite to the through hole 31 in the thickness direction of the separator 3 and the cross-sectional area S₂ of the pressure relief apparatus 11 to satisfy 50% ≤ S₁/S₂ ≤ 100% effectively ensures a pressure relief capability of the pressure relief apparatus 11, and ensures a pressure relief area of the battery cell 100. In this way, there is a greater volume of gas flowing through the gas venting channel of the pressure relief apparatus 11 per unit time after the pressure relief apparatus 11 is opened, thereby increasing the gas venting speed of the battery cell 100 and enhancing use safety of the battery cell 100.

According to some embodiments of this application, a cross-sectional area of the through hole 31 taken along a plane perpendicular to the thickness direction of the separator 3 is S₃, a cross-sectional area of the separator 3 taken along a plane perpendicular to the thickness direction of the separator 3 is S₄, and S₃ and S₄ satisfy: 30% ≤ S₃/S₄ ≤ 80%. For example, when a ratio S₃/S₄ of the cross-sectional area S₃ of the through hole 31 taken along the plane perpendicular to the thickness direction of the separator 3 to the cross-sectional area S₄ of the separator 3 taken along the plane perpendicular to the thickness direction of the separator 3 is less than 30%, the cross-sectional area of the through hole 31 is relatively small. This results in relatively small storage space for electrolyte, making overflow more likely during electrolyte filling and potentially damaging the battery cell 100. In addition, the through hole 31 is relatively small, which also makes electrolyte filling for the battery cell 100 less convenient. When the ratio S₃/S₄ of the cross-sectional area S₃ of the through hole 31 taken along the plane perpendicular to the thickness direction of the separator 3 to the cross-sectional area S₄ of the separator 3 taken along the plane perpendicular to the thickness direction of the separator 3 is greater than 80%, the through hole 31 occupies relatively large space on the separator 3, which reduces structural strength of the separator 3, and is detrimental to long-term use of the separator 3. Therefore, setting the cross-sectional area S₃ of the through hole 31 taken along the plane perpendicular to the thickness direction of the separator 3 and the cross-sectional area S₄ of the separator 3 taken along the plane perpendicular to the thickness direction of the separator 3 to satisfy 30% ≤ S₃/S₄ ≤ 80% is conductive to increasing storage space for electrolyte, thereby reducing a risk of electrolyte overflow, and avoiding damage to the battery cell 100. In addition, structural strength of the separator 3 is ensured, thereby enhancing a protective effect of the separator 3 on the electrode core 2, and extending a service life of the battery cell 100.

According to some embodiments of this application, referring to FIG. 3 and FIG. 6 to FIG. 8, there are a plurality of through holes 31. In the descriptions of this application, the term "a plurality of" means two or more. The plurality of through holes 31 form at least one first through hole group 32 and at least one second through hole group 33. The first through hole group 32 includes a plurality of first through holes 321, and the plurality of first through holes 321 are arranged at intervals in a radial direction of the separator 3. The second through hole group 33 includes a plurality of second through holes 331, and the plurality of second through holes 331 are arranged at intervals in a circumferential direction of the separator 3. The plurality of second through holes 331 and the plurality of first through holes 321 are spaced apart from each other.

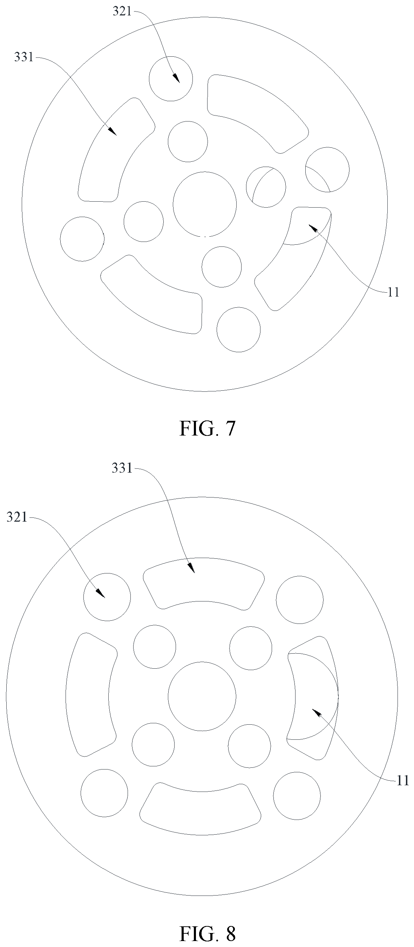

For example, in the examples shown in FIG. 3 and FIG. 6 to FIG. 8, the second through hole group 33 includes four second through holes 331. The four second through holes 331 are arranged at intervals in the circumferential direction of the separator 3. The first through hole group 32 and the second through hole group 33 are spaced apart from each other. Between two adjacent second through holes 331, a plurality of first through holes 321 are disposed. In this setting, a quantity and an arrangement of the through holes 31 are moderate, thereby further increasing storage space for electrolyte, to further avoid electrolyte overflow, and avoid damage to the battery cell 100. Furthermore, material consumption for the separator 3 is reduced, thereby lowering production costs of the separator 3, and reducing a weight of the separator 3, which in turn reduces a weight of the battery cell 100. In addition, this facilitates at least one of the plurality of through holes 31 being opposite to the pressure relief apparatus 11, thereby ensuring communication between the through holes 31 and the pressure relief apparatus 11 and improving the smoothness of gas venting, and further facilitates assembly of the separator 3 (that is, even after the separator 3 is rotated about a central axis of the separator 3, the through holes 31 can still be opposite to the pressure relief apparatus 11). Moreover, a layout of the first through hole group 33 and the second through hole group 33 is proper. While normal use of the separator 3 is ensured, structural strength of the separator 3 is improved, thereby improving stability for long-term use of the separator 3, and also enhancing an aesthetic appearance of the separator 3. It should be noted that the quantity and the arrangement of the first through holes 321, as well as a quantity and an arrangement of the second through holes 331, may be specifically set based on actual use, to better meet an actual application requirement. For example, FIG. 7 and FIG. 8 are schematic diagrams of the separator 3 being opposite to the pressure relief apparatus 11 in different states after rotation.

According to some embodiments of this application, referring to FIG. 6, a cross-sectional area of the second through hole 331 taken along a plane perpendicular to the thickness direction of the separator 3 is greater than the cross-sectional area of the first through hole 321 taken along the plane perpendicular to the thickness direction of the separator 3. For example, in the example shown in FIG. 6, the first through hole 321 may be configured to be in a circular shape, the second through hole 331 may be configured to be in a polygonal shape, and the second through hole 331 extends in a curved manner in the circumferential direction of the separator 3. In this setting, when the separator 3 is assembled with the casing 1, the separator 3 may be placed at any angle in the circumferential direction of the separator 3. That is, even after the separator 3 is rotated relative to the casing 1, the second through hole 331 can still be opposite to the pressure relief apparatus 11. This facilitates pressure relief for the battery cell 100, and effectively ensures normal use of the pressure relief apparatus 11, thereby further enhancing use safety of the battery cell 100. In addition, an aesthetic appearance of the separator 3 is improved. Moreover, structures of the first through hole 321 and the second through hole 331 are simple, thereby making production and processing convenient, which is beneficial for mass production of the separator 3. It should be noted that shapes of the first through hole 321 and the second through hole 331 may be specifically set based on actual use, to better meet an actual application requirement.

According to some embodiments of this application, referring to FIG. 6, cross-sectional areas of the plurality of first through holes 321 taken along a plane perpendicular to the thickness direction of the separator 3 are all the same. This improves a balance of the separator 3, thereby enhancing stability of the separator 3 after mounting, and further simplifies a structure of the separator 3, which is beneficial for mass production of the separator 3.

According to some other embodiments of this application, referring to FIG. 6, cross-sectional areas of at least two of the plurality of first through holes 321 taken along a plane perpendicular to the thickness direction of the separator 3 are different. This allows for disposing a plurality of first through holes 321 with different cross-sectional areas while ensuring structural strength of the separator 3, thereby increasing the cross-sectional areas of the plurality of through holes 31. This facilitates the first through hole 321 being opposite to the pressure relief apparatus 11, and further effectively increases storage space for electrolyte. In addition, this allows for proper disposing of the first through holes 321 based on a layout of the second through holes 331, thereby making an arrangement of the plurality of first through holes 321 and the plurality of second through holes 331 more compact, and optimizing spatial design of the separator 3.

According to some embodiments of this application, referring to FIG. 3 and FIG. 6, there are a plurality of first through hole groups 32. The plurality of first through hole groups 32 are arranged at intervals in the circumferential direction of the separator 3, and the second through hole 331 is located between two adjacent first through hole groups 32. For example, in the examples shown in FIG. 3 and FIG. 6, there are four first through hole groups 32. The four first through hole groups 32 and four second through holes 331 are arranged at intervals in the circumferential direction of the separator 3, and the first through hole groups 32 and the second through holes 331 are centrally symmetrical about a center of the separator 3. In this setting, through a combined effect of the plurality of first through hole groups 32, a weight of the separator 3 is further reduced, and storage space for electrolyte is further increased. In addition, this not only improves an aesthetic appearance of the separator 3, but also enhances stability of the separator 3, thereby enabling the separator 3 to better protect the electrode core 2, and further facilitating mass production of the separator 3.

According to some embodiments of this application, referring to FIG. 6, a minimum distance between any second through hole 331 and a first through hole 321 that is of an adjacent first through hole group 32 and that is close to an edge of the separator 3 is l₁, and l₁ satisfies: 0.5 mm ≤ l₁ ≤ 3 mm. For example, when the minimum distance l₁ between any second through hole 331 and the first through hole 321 that is of the adjacent first through hole group 32 and that is close to the edge of the separator 3 is less than 0.5 mm, a distance between the second through hole 331 and the first through hole 321 that is of the adjacent first through hole group 32 and that is close to the edge of the separator 3 is close. This reduces structural strength of the separator 3, making the separator 3 prone to fracture, and consequently shortens a service life of the separator 3. When the minimum distance l₁ between any second through hole 331 and the first through hole 321 that is of the adjacent first through hole group 32 and that is close to the edge of the separator 3 is greater than 3 mm, after the separator 3 is mounted, a connection part between the second through hole 331 and the first through hole 321 that is of the adjacent first through hole group 32 and that is close to the edge of the separator 3 is likely to obstruct the pressure relief apparatus 11. This affects gas venting of the pressure relief apparatus 11, and is consequently detrimental to normal use of the battery cell 100. Therefore, setting the minimum distance l₁ between any second through hole 331 and the first through hole 321 that is of the adjacent first through hole group 32 and that is close to the edge of the separator 3 to satisfy 0.5 mm ≤ l₁ ≤ 3 mm makes a layout of the first through holes 321 and the second through holes 331 proper, and enhances structural strength of the separator 3, thereby strengthening a protective effect of the separator 3 on the battery cell 100, and further extending a service life of the separator 3. In addition, this facilitates the through hole 31 being opposite to the pressure relief apparatus 11, thereby increasing a gas venting channel of the pressure relief apparatus 11, and allowing gas to be smoothly vented to the outside of the battery cell 100.

According to other embodiments of this application, referring to FIG. 6, a minimum distance between two adjacent first through holes 321 that are of the first through hole group 32 and that are close to the edge of the separator 3 is l₂, and l₂ satisfies: 0.5 mm ≤ l₂ ≤ 3 mm. For example, when the minimum distance l₂ between the two adjacent first through holes 321 that are of the first through hole group 32 and that are close to the edge of the separator 3 is less than 0.5 mm, a connection part between the two adjacent first through holes 321 that are of the first through hole group 32 and that are close to the edge of the separator 3 is narrow. This reduces structural strength of the separator 3, making the separator 3 prone to fracture and damage, and consequently shortens a service life of the separator 3. When the minimum distance l₂ between the two adjacent first through holes 321 that are of the first through hole group 32 and that are close to the edge of the separator 3 is greater than 3 mm, after the separator 3 is mounted, the connection part between the two adjacent first through holes 321 that are of the first through hole group 32 and that are close to the edge of the separator 3 tends to have a larger area of obstruction over the pressure relief apparatus 11. This is likely to hinder gas venting of the pressure relief apparatus 11, which is detrimental to safe use of the battery cell 100. Therefore, setting the minimum distance l₂ between the two adjacent first through holes 321 that are of the first through hole group 32 and that are close to the edge of the separator 3 to satisfy 0.5 mm ≤ l₂ ≤ 3 mm makes a distance between two adjacent first through holes 321 moderate. This improves structural strength of the separator 3, and is further beneficial for normal use of the separator 3. In addition, this facilitates the through hole 31 being opposite to the pressure relief apparatus 11, thereby increasing a gas venting channel of the pressure relief apparatus 11, and allowing gas to be smoothly vented to the outside of the battery cell 100.

According to some other embodiments of this application, a minimum distance between any second through hole 331 and a first through hole 321 that is of an adjacent first through hole group 32 and that is close to an edge of the separator 3 is l₁, and l₁ satisfies: 0.5 mm ≤ l₁ ≤ 3 mm. In addition, a minimum distance between two adjacent first through holes 321 that are of the first through hole group 32 and that are close to the edge of the separator 3 is l₂, and l₂ satisfies: 0.5 mm ≤ l₂ ≤ 3 mm. In this way, structural strength of the separator 3 is improved, thereby enhancing a protective effect of the separator 3 on the electrode core 2, and extending a service life of the separator 3. Furthermore, this facilitates communication between the pressure relief apparatus 11 and the through hole 31. Therefore, when an internal pressure of the battery cell 100 becomes excessively high, gas can be smoothly vented to the outside through the through hole 31 and the pressure relief apparatus 11, thereby enhancing use safety of the battery cell 100.

Further, referring to FIG. 3, a thickness of the separator 3 is h, and h satisfies: 0.3 mm ≤ h ≤ 2 mm. For example, when the thickness h of the separator 3 is less than 0.3 mm, a spatial volume of the through hole 31 is relatively small, which results in a relatively small amount of electrolyte stored in the through hole 31. This makes electrolyte prone to overflow, potentially damaging the battery cell 100. When the thickness h of the separator 3 is greater than 2 mm, the separator 3 occupies relatively large space in the casing 1, which reduces internal space utilization of the casing 1. Therefore, setting the thickness h of the separator 3 to satisfy 0.3 mm ≤ h ≤ 2 mm, storage space for electrolyte is increased, thereby avoiding electrolyte overflow during filling. In addition, this further rationalizes space occupied by the separator 3 in the casing 1, thereby improving internal space utilization of the casing 1.

According to some optional embodiments of this application, the separator 3 is a polyethylene terephthalate member or a polypropylene member. When the separator 3 is configured as the polyethylene terephthalate member, polyethylene terephthalate has an electrical insulating property, which impedes a current flow in the electrode core 2 from flowing to the casing 1, thereby reducing structural impedance. When the separator 3 is configured as the polypropylene member, polypropylene also has an electrical insulating property, thereby reducing structural impedance. In addition, a material is widely available. In addition, polypropylene has high mechanical strength and excellent abrasion resistance during processing, thereby enhancing a protective effect of the separator 3 on the electrode core 2, and extending a service life of the separator 3. Optionally, the separator 3 is formed through injection molding. This improves molding quality of the separator 3, and further enhances production efficiency and processing accuracy of the separator 3.

Further optionally, referring to FIG. 5, the pressure relief apparatus 11 is welded to the casing 1, and a protection member 13 is disposed on a side that is of the pressure relief apparatus 11 and that is away from the casing 1. For example, in the example shown in FIG. 5, the protection member 13 is opposite to the pressure relief apparatus 11, and the protection member 13 is assembled with the casing 1. In this setting, connection strength between the pressure relief apparatus 11 and the casing 1 is improved, so that the pressure relief apparatus 11 does not detach from the casing 1. In addition, the protection member 13 can protect the pressure relief apparatus 11, thereby extending a service life of the pressure relief apparatus 11. For example, the protection member 13 is formed through injection molding using polyester resin. Therefore, production and processing of the protection member 13 are facilitated, thereby improving manufacturing efficiency of the protection member 13, and enhancing structural strength of the protection member 13, which is beneficial for long-term use of the protection member 13.

According to some optional embodiments of this application, the pressure relief apparatus 11 is formed by stamping steel or by laser scoring, with a burst pressure P, where P satisfies: 0.5 MPa ≤ P ≤ 2 MPa. In this way, production efficiency and processing accuracy of the pressure relief apparatus 11 are relatively high, thereby enhancing assembly precision between the pressure relief apparatus 11 and the casing 1 and facilitating long-term use of the pressure relief apparatus 11.

Optionally, the housing 120 is formed by stamping steel or by winding and welding a sheet material into a cylindrical shape, and the bottom cover plate 12 is reformed by stamping steel, where the steel is corrosion-proof. This enhances connection strength between the bottom cover plate 12 and a circumferential side wall of the housing 120, thereby improving structural strength of the casing 1, and facilitating long-term and stable use of the casing 1. In addition, forming by steel stamping improves flatness of the bottom cover plate 12.

Further, referring to FIG. 5, a reinforcing rib 121 is formed on a lower surface of the bottom cover plate 12. For example, in the example shown in FIG. 4, the reinforcing rib 121 is formed through recessing from the lower surface of the bottom cover plate 12 towards an upper surface of the bottom cover plate 12, and a mounting position of the reinforcing rib 121 is opposite to a mounting position of the pressure relief apparatus 11 in a radial direction of the bottom cover plate 12. In this way, disposing the reinforcing rib 121 enhances structural strength of the bottom cover plate 12, thereby increasing structural strength of the casing 1.

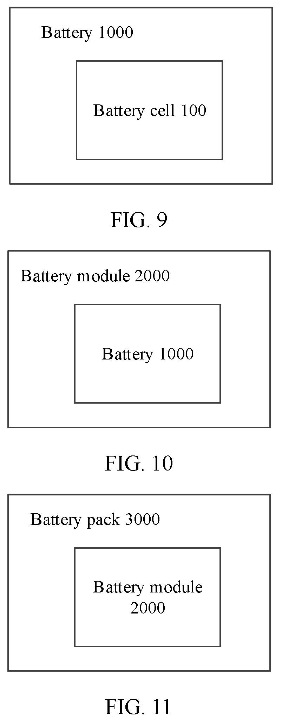

A battery 1000 according to an embodiment of a second aspect of this application includes the battery cell 100 according to the foregoing embodiment of the first aspect of this application, as shown in FIG. 9.

In the battery 1000 according to this application, adopting the foregoing battery cell 100 extends a service life of the battery 1000, and improves use safety of the battery 1000.

A battery module 2000 according to an embodiment of a third aspect of this application includes the battery 1000 according to the foregoing embodiment of the second aspect of this application, as shown in FIG. 10.

In the battery module 2000 according to this application, adopting the foregoing battery 1000 extends a service life of the battery module 2000, and improves use safety of the battery module 2000.

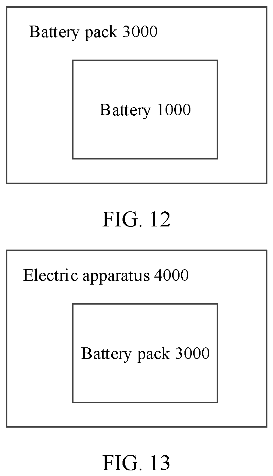

A battery pack 3000 according to an embodiment of a fourth aspect of this application includes the battery 1000 according to the foregoing embodiment of the second aspect of this application or the battery module 2000 according to the foregoing embodiment of the third aspect of this application, as shown in FIG. 11 and FIG. 12.

In the battery pack 3000 according to this application, adopting the foregoing battery 1000 or the foregoing battery module 2000 avoids damage to the battery pack 3000 to extend a service life of the battery pack 3000, and further allows for effective pressure relief when internal pressure of the battery 1000 is excessively high, to enhance safety of the battery pack 3000.

An electric apparatus 4000 according to an embodiment of a fifth aspect of this application includes the battery pack 3000 according to the foregoing embodiment of the fourth aspect of this application, as shown in FIG. 13.

In the electric apparatus 4000 according to this application, adopting the foregoing battery pack 3000 improves use performance of the electric apparatus 4000. The electric apparatus 4000 may be a vehicle, an electric two-wheeled vehicle, an electric multi-wheeled vehicle, an energy storage cabinet, an unmanned aerial vehicle, a vessel, or the like.

Other components of the battery cell 100, the battery 1000, the battery module 2000, the battery pack 3000, and the electric apparatus 4000 according to embodiments of this application are already known to a person of ordinary skill in the art. Details are not described herein again.

In the description of this application, it should be understood that the orientations or positional relationships indicated by terms "center", "length", "thickness", "upper", "lower", "inside", "outside", "axial", "radial", and "circumferential" are based on the orientations or positional relationships shown in the drawings and are only for convenience of description of this application and simplification of description rather than indicating or implying that the apparatus or element referred to needs to have a particular orientation or be constructed and operated in a particular orientation, and therefore, should not be understood as a limitation on this application.

In the descriptions of this specification, descriptions provided with reference to terms such as "an embodiment", "some embodiments", "an example embodiment", "an example", "a specific example", or "some examples" mean that specific features, structures, materials, or characteristics described with reference to the embodiment or example are included in at least one embodiment or example of this application. In this specification, illustrative expressions of the foregoing terms do not necessarily refer to a same embodiment or example.

Although embodiments of this application have been shown and described, a person of ordinary skill in the art may understand that many changes, modifications, replacements, and variations can be made to these embodiments without departing from the principles and purposes of this application, and the scope of this application is defined by the claims and their equivalents.

## Claims

1. A battery cell (100), comprising:
a casing (1);
an electrode core (2), wherein the electrode core (2) is disposed in the casing (1), two ends in a length direction of the electrode core (2) are a first end (21) and a second end (22) respectively, the first end (21) is provided with a positive tab (211) and a negative tab (212); and
a separator (3), wherein the separator (3) is disposed in the casing (1), the separator (3) is located between the second end (22) of the electrode core (2) and the casing (1), and the separator (3) isolates the electrode core (2) from the casing (1).

2. The battery cell (100) according to claim 1, wherein at least one penetrating through hole (31) is formed on the separator (3).

3. The battery cell (100) according to claim 2, wherein a pressure relief apparatus (11) is disposed on the casing (1), and the pressure relief apparatus (11) is configured to be capable of releasing internal pressure of the battery cell (100).

4. The battery cell (100) according to claim 3, wherein the casing (1) comprises a housing (120) and a bottom cover plate (12) that are connected to each other, the separator (3) isolates the electrode core (2) from the bottom cover plate (12), and the pressure relief apparatus (11) is disposed on the bottom cover plate (12).

5. The battery cell (100) according to claim 3 or 4, wherein at least a part of the pressure relief apparatus (11) is opposite to the through hole (31) in a thickness direction of the separator (3).

6. The battery cell (100) according to claim 5, wherein an overlapping area between a projection of the at least a part of the pressure relief apparatus (11) on the separator (3) in the thickness direction of the separator (3) and the through hole (31) is S₁, a cross-sectional area of the pressure relief apparatus (11) taken along a plane perpendicular to the thickness direction of the separator (3) is S₂, and S₁ and S₂ satisfy: 50% ≤ S₁/S₂ ≤ 100%.

7. The battery cell (100) according to any one of claims 2 to 6, wherein a cross-sectional area of the through hole (31) taken along a plane perpendicular to the thickness direction of the separator (3) is S₃, a cross-sectional area of the separator (3) taken along a plane perpendicular to the thickness direction of the separator (3) is S₄, and S₃ and S₄ satisfy: 30% ≤ S₃/S₄ ≤ 80%.

8. The battery cell (100) according to any one of claims 2 to 7, wherein there are a plurality of through holes (31), the plurality of through holes (31) form at least one first through hole group (32) and at least one second through hole group (33), the first through hole group (32) comprises a plurality of first through holes (321), the plurality of first through holes (321) are arranged at intervals in a radial direction of the separator (3), the second through hole group (33) comprises a plurality of second through holes (331), the plurality of second through holes (331) are arranged at intervals in a circumferential direction of the separator (3), and the plurality of second through holes (331) and the plurality of first through holes (321) are spaced apart from each other.

9. The battery cell (100) according to claim 8, wherein a cross-sectional area of the second through hole (331) taken along a plane perpendicular to the thickness direction of the separator (3) is greater than a cross-sectional area of the first through hole (321) taken along a plane perpendicular to the thickness direction of the separator (3).

10. The battery cell (100) according to claim 8 or 9, wherein cross-sectional areas of the plurality of first through holes (321) taken along a plane perpendicular to the thickness direction of the separator (3) are all the same; or
cross-sectional areas of at least two of the plurality of first through holes (321) taken along a plane perpendicular to the thickness direction of the separator (3) are different.

11. The battery cell (100) according to any one of claims 8 to 10, wherein there are a plurality of first through hole groups (32), the plurality of first through hole groups (32) are arranged at intervals in the circumferential direction of the separator (3), and the second through hole (331) is located between two adjacent first through hole groups (32).

12. The battery cell (100) according to any one of claims 8 to 11, wherein a minimum distance between any second through hole (331) and a first through hole (321) that is of an adjacent first through hole group (32) and that is close to an edge of the separator (3) is l₁, and l₁ satisfies: 0.5 mm ≤ l₁ ≤ 3 mm; and/or
a minimum distance between two adjacent first through holes (321) that are of the first through hole group (32) and that are close to the edge of the separator (3) is l₂, and l₂ satisfies: 0.5 mm ≤ l₂ ≤ 3 mm.

13. The battery cell (100) according to any one of claims 1 to 12, wherein a thickness of the separator (3) is h, and h satisfies: 0.3 mm ≤ h ≤ 2 mm.

14. The battery cell (100) according to any one of claims 1 to 13, wherein the separator (3) is a polyterephthalic acid member or a polypropylene member.

15. A battery (1000), comprising the battery cell (100) according to any one of claims 1 to 14.

16. A battery module (2000), comprising the battery (1000) according to claim 15.

17. A battery pack (3000), comprising the battery (1000) according to claim 15 or the battery module (2000) according to claim 16.

18. An electric apparatus (4000), comprising the battery pack (3000) according to claim 17.
